# FASCICULE DE BREVET EUROPEEN

(11) **EP 3 907 638 B1**
(45) Date de publication et mention de la délivrance du brevet: **21.08.2024**
(21) Numéro de dépôt: 21172207.9
(22) Date de dépôt: 05.05.2021
(51) Int. Cl.: G06F 21/57

(54) **CONTRÔLEUR DE DÉMARRAGE SÉCURISÉ POUR UN SYSTÈME EMBARQUÉ, SYSTÈME EMBARQUÉ ET PROCÉDÉ DE DÉMARRAGE SÉCURISÉ ASSOCIÉS**
GESICHERTER STARTCONTROLLER FÜR EIN EINGEBETTETES SYSTEM, ENTSPRECHENDES EINGEBETTETES SYSTEM UND GESICHERTES STARTVERFAHREN
SECURE CONTROLLER FOR STARTING AN ON-BOARD SYSTEM, ASSOCIATED ON-BOARD SYSTEM AND SECURE STARTING METHOD

(30) Priorité: 05.05.2020 FR 2004434
(43) Date de publication de la demande: 10.11.2021
(73) Titulaire: THALES, 92400 Courbevoie (FR)
(72) Inventeur: MONNIER, Stéphane, 33701 MERIGNAC (FR)
(74) Mandataire: Lavoix

(56) Documents cités:
- US-A1- 2005 091 522
- US-A1- 2016 300 064

## Description

La présente invention concerne un contrôleur de démarrage sécurisé.

La présente invention concerne également un système embarqué et un procédé de démarrage sécurisé, associés à ce contrôleur de démarrage sécurisé.

Le système embarqué selon l'invention est notamment un système avionique.

Le document US 2016/300064 A1 décrit un processeur sécurisé pour l'initialisation d'un SOC (de l'anglais « System On a Chip »).

Le document US 2005/091522 A1 décrit un dispositif de sécurité informatique comprenant un processeur qui est indépendant d'une CPU hôte pour contrôler l'accès entre la CPU hôte et un dispositif de stockage.

Dans le domaine des systèmes embarqués et notamment dans le domaine des systèmes avioniques, la cyber sécurité devient un des éléments clés de l'architecture. Pour répondre à de nombreux scenarii de menaces, les systèmes embarqués actuels doivent pouvoir garantir l'authenticité et l'intégrité de l'ensemble de ses composantes.

Des mécanismes de vérification de signatures de ces composantes au démarrage du système permettent de répondre à cette problématique.

Toutefois, pour pouvoir intégrer des mécanismes de démarrage sécurisés des systèmes embarqués, il est nécessaire généralement de modifier les architectures existantes. En effet, pour pouvoir assurer un démarrage sécurisé, il est nécessaire d'intervenir dès les premières étapes du démarrage du système embarqué, imposant ainsi une reprise des composantes logiciel de bas niveau pour pouvoir lancer les mécanismes de vérifications de signatures.

Cette reprise est d'autant plus gênante quand les composantes de bas niveau présentent des composantes COTS (« composantes prises sur étagère »).

Selon les méthodes de l'état de la technique, pour assurer un démarrage sécurisé, il existe des mécanismes de types certificats ou chaîne de confiance.

En particulier, selon ce deuxième cas, au démarrage d'un système embarqué, une composante matérielle vérifie et lance un logiciel de démarrage qui vérifie et lance un système d'exploitation qui, à son tour, vérifie et lance des applications hébergées par ce système d'exploitation.

Toutefois, dans les deux cas, les impacts sur l'architecture existante du système embarqué sont non négligeables et imposent généralement une reprise d'au moins plusieurs composantes de ce système embarqué.

En particulier, les mécanismes existants ne permettent pas d'intégrer un mécanisme de démarrage sécurisé à une composante d'un système embarqué, sans modifier au moins certaines autres composantes de ce système.

Or, une telle modification des autres composantes du système peut impliquer la nécessité de leur recertification ce qui représente un processus très complexe et coûteux. Cela est notamment le cas lorsque ces composantes présentent un niveau de criticité DAL (de l'anglais « *Development Assurance Level* ») élevé, comme par exemple le niveau DAL A.

La présente invention a pour but de proposer un contrôleur de démarrage sécurisé permettant de mettre en oeuvre un mécanisme de démarrage sécurisé d'une composante quelconque d'un système embarqué, sans modifier les autres composantes de ce système et éventuellement, sans nécessité de recertification de ces autres composantes.

À cet effet, l'invention a pour objet un contrôleur selon la revendication 1.

Selon d'autres caractéristiques de l'invention, le contrôleur est selon l'une quelconque des revendications 2 à 6.

L'invention a également pour objet un système embarqué selon la revendication 7.

L'invention a également pour objet un procédé de démarrage selon la revendication 8.

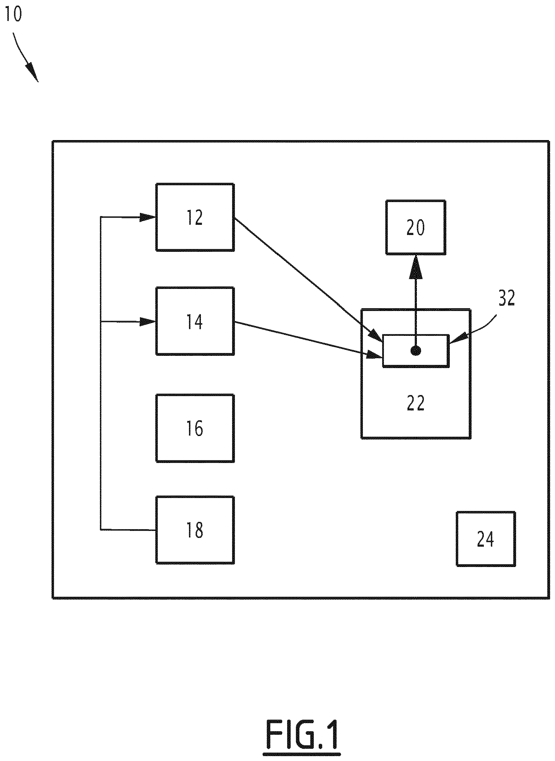

Ces caractéristiques et avantages de l'invention apparaîtront à la lecture de la description qui va suivre, donnée uniquement à titre d'exemple non limitatif, faite en référence à la figure unique, appelée également figure 1 [Fig 1], sur laquelle on a illustré schématiquement un système embarqué selon l'invention.

En particulier, sur cette figure, le système embarqué est désigné sous la référence 10 et présente notamment un système avionique.

Dans un exemple particulier de l'invention, ce système avionique présente un commutateur d'un réseau avionique. Selon d'autres exemples de l'invention, ce système avionique présente tout autre système d'un aéronef.

Avantageusement, le système embarqué 10 est un système critique d'un niveau de criticité DAL (de l'anglais « *Development Assurance Level* ») déterminé.

Comme cela est visible sur la figure, le système embarqué 10 comprend un module opérationnel 12, un module de vérification 14, un module de configuration 16 et un contrôleur de démarrage 18.

Le système embarqué 10 comprend également des ressources matérielles permettant de mettre en oeuvre le fonctionnement de ses différentes composantes 12 à 18.

Ces ressources matérielles sont connues en soi et comprennent notamment un processeur 20, un espace de stockage 22 et une mémoire vive 24.

En particulier, l'espace de stockage 22 présente par exemple une mémoire de type FLASH permettant de stocker à des différentes adresses différentes fonctions exécutables par le processeur 20. Ces fonctions présentent donc des logiciels.

Notamment, l'espace de stockage 22 définit une zone de démarrage 32 définissant une fonction à exécuter par le processeur 20 au démarrage du système 10. Une telle fonction est donc exécutable au démarrage selon la terminologie utilisée dans la suite.

En particulier, cette zone de démarrage 32 présente une adresse de mémoire prédéfinie à laquelle se reporte le processeur 20 au démarrage du système 10.

La zone de démarrage 32 contient ainsi une fonction exécutable au démarrage par le processeur 20 ou au moins une référence à une adresse de mémoire stockant cette fonction, lorsqu'elle se présente sous la forme d'un logiciel. Lorsque la fonction exécutable au démarrage est implémentée au moins partiellement sous la forme d'une composante matérielle, la zone de démarrage 32 contient donc une référence vers cette composante.

La mémoire vive 24 est également connue en soi et présente en particulier un tampon d'échange entre les différentes composantes du système embarqué 10.

Comme cela est également connu en soi, la mémoire vive 24 permet de stocker au moins temporellement des données d'échange lorsque le système embarqué 10 est alimenté.

Dans certains exemples de réalisation, la mémoire vive 24 permet également de stocker des données d'échange lors des coupures, dites courtes, de courant lors desquelles elle est par exemple alimentée par une composante intérieure du système embarqué 10 présentant une réserve en énergie. Une telle composante permet par exemple de rendre le système embarqué 10 insensible à ce type de perturbations.

Le module opérationnel 12 intègre une fonction opérationnelle du système embarqué 10.

Cette fonction opérationnelle est mise en oeuvre par le système embarqué 10 et notamment par le processeur 20. Dans l'exemple décrit, cette fonction opérationnelle se présente par exemple sous la forme d'un logiciel qui est alors stocké par exemple dans l'espace de stockage 22.

Dans l'exemple de réalisation où le système embarqué 10 présente un commutateur d'un réseau avionique, la fonction opérationnelle assurée par le module opérationnel 12 présente par exemple les transmissions des données de maintenance.

Le module de configuration 16 permet de définir des paramètres de fonctionnement du système 10.

Ainsi, par exemple, ce module de configuration 16 définit une pluralité de paramètres de fonctionnement d'au moins certaines des composantes du système 10.

Dans l'exemple de réalisation où le système embarqué 10 présente un commutateur, le module de configuration 16 présente notamment une table de configuration définissant le cheminement des données entre différents ports d'entrée et de sortie de ce commutateur.

Avantageusement, selon l'invention, ce module de configuration 16 se présente sous la forme d'une mémoire non volatile telle qu'une mémoire de type FLASH.

Le module de vérification 14 intègre une fonction de vérification de différentes composantes du système embarqué 10.

En particulier, cette fonction de vérification permet de vérifier l'authenticité et l'intégrité de chacune de ces composantes, selon par exemple des méthodes connues en soi.

Notamment, dans l'exemple de réalisation décrit, la fonction de vérification permet de vérifier l'authenticité et l'intégrité du module de configuration 16, et notamment de la table de configuration dans le cas du commutateur, ainsi que l'authenticité et l'intégrité du module opérationnel 12 en analysant par exemple les signatures de celui-ci avec des algorithmes cryptographiques de type SHA (de l'anglais « *Secure Hash Algorithm* ») ou RSA (appelé d'après ses auteurs Ronald Rivest, Adi Shamir et Leonard Adleman) ou d'autres.

Avantageusement, selon l'invention, le module de vérification 14 permet de mettre en oeuvre sa fonction de vérification par rapport à chacune des composantes du système embarqué 10 au démarrage de ce système, comme cela sera expliqué en détail par la suite.

Le module de vérification 14 se présente par exemple sous la forme d'une composante matérielle par exemple d'une composante FPGA (« *Field Programmable Array* » en anglais) ou alors sous la forme d'un logiciel.

Dans ce dernier cas, la fonction de vérification intégrée dans le module de vérification 14 est stockée par exemple dans l'espace de stockage 22.

Le contrôleur de démarrage sécurisé 18 selon l'invention permet de mettre en oeuvre un démarrage sécurisé du système 10 comme cela sera expliqué en détail par la suite en référence au procédé de démarrage selon l'invention.

En particulier, pour ce faire, le contrôleur 18 permet lors de chaque démarrage du système embarqué 10, de déterminer le type de démarrage du système. Notamment, le contrôleur 18 permet de déterminer s'il s'agit d'un démarrage à froid du système 10 ou d'un démarrage à chaud.

En particulier, dans tout ce qui suit, par démarrage à froid ou premier démarrage, on entend un démarrage après une perte au moins partielle des données d'échange de la mémoire vive 24. Ce démarrage se reproduit notamment suite à une coupure prolongée de courant ou alors suite à un arrêt du système 10. Un démarrage à froid est effectué également lors de tout premier démarrage du système, c'est-à-dire, lors du premier démarrage du système après son assemblage et/ou installation.

Pour opposition au démarrage à froid, par démarrage à chaud, on entend un démarrage du système 10 suite à une coupure courte de courant. Généralement, lors d'un tel démarrage à chaud du système, les données de la mémoire vive 24 ne sont pas perdues.

Pour déterminer le type de démarrage, le contrôleur 18 est apte par exemple à consulter l'état d'un registre de démarrage modifiable par un contrôleur d'alimentation. En particulier, en fonction par exemple de la durée de la coupure de courant, ce contrôleur d'alimentation est apte à modifier l'état de ce registre pour une valeur particulière.

Le contrôleur 18 permet également de modifier la zone de démarrage 32 en fonction du type de démarrage déterminé comme cela sera expliqué par la suite.

Le contrôleur 18 se présente par exemple sous la forme d'une composante matérielle, notamment sous la forme d'une composante FPGA.

Avantageusement selon l'invention, son niveau de criticité DAL est équivalent à celui du module de vérification 14 et est supérieur au niveau de criticité du module opérationnel 12. Par exemple, le contrôleur 18 et le module de vérification 14 peuvent présenter le niveau de criticité DAL A alors que le module opérationnel 12 peut présenter un niveau de criticité plus faible (DAL B ou DAL C ou même DAL D ou DAL E) ou égal au niveau de criticité DAL A.

Le procédé de démarrage sécurisé du système embarqué 10 selon l'invention sera désormais expliqué.

Initialement, il est considéré que le système 10 est sur le point d'être démarré.

Ainsi, tout d'abord, le procédé comprend une étape initiale lors de laquelle le contrôleur 18 détermine le type de démarrage.

Lorsque le contrôleur 18 détermine qu'il s'agit d'un démarrage à froid, lors d'une étape suivante, il rend exécutable au démarrage la fonction de vérification pour effectuer une vérification de l'authenticité et de l'intégrité de la fonction opérationnelle ainsi que du module de configuration 16.

En particulier, pour rendre exécutable la fonction de vérification, le contrôleur 18 place la fonction de vérification ou alors une référence de celle-ci dans la zone de démarrage 32.

Par ailleurs, pour rendre la fonction opérationnelle visible à la fonction de vérification, le contrôleur 18 associe à cette fonction opérationnelle une adresse mémoire dans l'espace de stockage 22.

Ensuite, le contrôleur 18 récupère un résultat de vérification effectuée par la fonction de vérification.

Lorsque lors de l'étape initiale le contrôleur 18 détermine qu'il s'agit d'un démarrage à chaud, lors d'une étape suivante, ce contrôleur 18 vérifie tout d'abord le résultat de vérification fourni par la fonction de vérification lors du démarrage à froid.

Lorsque ce résultat est positif, c'est-à-dire lorsque la vérification est réussie, lors d'une étape suivante, le contrôleur 18 rend exécutable au démarrage la fonction opérationnelle intégrée dans le module opérationnel 12.

Pour cela, comme dans le cas précédent, le contrôleur 18 place cette fonction opérationnelle ou alors une référence à celle-ci dans la zone de démarrage 22 en remplaçant ainsi la fonction de vérification ou une référence à celle-ci dans cette zone.

Dans ce cas, le démarrage du système embarqué 10 s'effectue alors sans l'exécution de la fonction de vérification.

On conçoit alors que la présente invention présente un certain nombre d'avantages.

Tout d'abord, il est clair que le contrôleur selon l'invention permet de gérer l'exécution au démarrage de différentes composantes du système en fonction du type du démarrage.

Ainsi, lors d'un démarrage à froid, le contrôleur rend exécutable la fonction de vérification qui vérifie alors les autres composantes du système embarqué et notamment la fonction opérationnelle et le module de configuration.

Lorsqu'il s'agit de l'un des démarrages à chaud suivants, le contrôleur selon l'invention rend exécutable la fonction opérationnelle sans exécuter la fonction de vérification. Cela permet alors d'intégrer un mécanisme de démarrage sécurisé dans un système embarqué sans modifier les autres composantes de ce système.

En effet, étant donné que la fonction opérationnelle et la fonction de vérification sont exécutées indépendamment l'une de l'autre au démarrage du système, la fonction opérationnelle n'a pas besoin d'intégrer un mécanisme de démarrage sécurisé spécifique. Cette sécurité est assurée par la fonction de vérification lors du démarrage à froid du système.

Cela permet alors d'éviter la nécessite de recertification des composantes non-modifiées du système embarqué ce qui est particulièrement avantageux lorsque ce système est d'un niveau de criticité élevé comme par exemple le niveau DAL A. Ainsi, l'invention permet de réduire considérablement le coût et la complexité du processus d'intégration d'une nouvelle composante dans un tel système embarqué.

## Revendications

1. Contrôleur de démarrage (18) sécurisé pour un système embarqué (10), le système embarqué (10) comprenant en outre un module opérationnel (12) intégrant une fonction opérationnelle du système (10), et un module de vérification (14) intégrant une fonction de vérification de différentes composantes du système (10) ;
le contrôleur (18) étant configuré pour :
- à un démarrage à froid du système (10), rendre exécutable au démarrage la fonction de vérification pour effectuer une vérification de fonctionnement comprenant une vérification de l'authenticité et de l'intégrité de la fonction opérationnelle ;
- lorsque la vérification de fonctionnement est réussie, à chaque démarrage à chaud suivant ledit démarrage à froid du système (10), rendre exécutable au démarrage la fonction opérationnelle,
le démarrage à froid correspondant à un redémarrage du système (10) après une coupure d'alimentation conduisant à une perte au moins d'une partie de données contenues dans une mémoire vive (24) du système (10),
le contrôleur (18) étant configuré en outre pour consulter l'état d'un registre de démarrage modifiable par un contrôleur d'alimentation du système embarqué (10) pour déterminer le type de démarrage choisi entre un démarrage à chaud et un démarrage à froid.

2. Contrôleur (18) selon la revendication 1, configuré pour rendre exécutable au démarrage une fonction en plaçant cette fonction ou une référence à celle-ci dans une zone de démarrage (32) réservée du système (10).

3. Contrôleur (18) selon la revendication 1 ou la revendication 2, se présentant sous la forme d'une composante matérielle, de préférence sous la forme d'une composante FPGA.

4. Contrôleur (18) selon l'une quelconque des revendications précédentes, implémenté selon le même niveau de criticité que le module de vérification (14), ce niveau de criticité étant supérieur ou égal au niveau de criticité du module opérationnel (12).

5. Contrôleur (18) selon l'une quelconque des revendications précédentes, configuré en outre pour, au démarrage à froid du système, associer à la fonction opérationnelle une adresse mémoire accessible par la fonction de vérification.

6. Contrôleur (18) selon l'une quelconque des revendications précédentes, dans lequel le système embarqué (10) comprend en outre un module de configuration (16) ;
ladite vérification de fonctionnement comprenant en outre une vérification de l'authenticité et de l'intégrité du module de configuration (16).

7. Système embarqué (10) comprenant :
- un module opérationnel (12) intégrant une fonction opérationnelle du système (10) ;
- un module de vérification (14) intégrant une fonction de vérification de différentes composantes du système (10) ;
- un contrôleur de démarrage sécurisé (18) selon l'une quelconque de revendications précédentes.

8. Procédé de démarrage sécurisé du système embarqué (10) selon la revendication 7 ;
le procédé comprenant l'étape suivante :
- à un démarrage à froid du système embarqué (10), rendre exécutable au démarrage la fonction de vérification pour effectuer une vérification de fonctionnement comprenant une vérification de l'authenticité et de l'intégrité de la fonction opérationnelle ; ou
- lorsque la vérification de fonctionnement est réussie, à chaque démarrage à chaud suivant ledit démarrage à froid du système (10), rendre exécutable au démarrage la fonction opérationnelle.

## Patentansprüche

1. Ein sicherer Start-Controller (18) für ein eingebettetes System (10), wobei das eingebettete System (10) weiterhin ein Betriebsmodul (12) umfasst, das eine Betriebsfunktion des Systems (10) enthält und ein Verifikationsmodul (14), das eine Überprüfungsfunktion verschiedener Komponenten des Systems (10) integriert;
wobei der Controller (18) konfiguriert ist, um:
- bei einem Kaltstart des Systems (10) die Überprüfungsfunktion beim Start ausführbar zu machen, um eine Funktionsüberprüfung durchzuführen, die eine Überprüfung der Authentizität und Integrität der Betriebsfunktion umfasst;
- wenn die Funktionsüberprüfung erfolgreich ist, bei jedem Warmstart, der auf den Kaltstart des Systems (10) folgt, die Betriebsfunktion beim Start ausführbar zu machen,
wobei der Kaltstart einem Neustart des Systems (10) nach einer Unterbrechung der Stromversorgung entspricht, die zu einem Verlust zumindest eines Teils der in einem RAM (24) des Systems (10) enthaltenen Daten führt,
wobei der Controller (18) außerdem so konfiguriert ist, dass er den Status eines Startregisters abfragt, das von einem Stromversorgungs-Controller des eingebetteten Systems (10) geändert werden kann, um die Art des Starts zu bestimmen, die zwischen einem Warmstart und einem Kaltstart gewählt wird.

2. Controller (18) nach Anspruch 1, der so konfiguriert ist, dass er beim Start eine Funktion ausführbar macht, indem er diese Funktion oder einen Verweis auf sie in einem reservierten Startbereich (32) des Systems (10) platziert.

3. Controller (18) nach Anspruch 1 oder Anspruch 2 in Form einer Hardwarekomponente, vorzugsweise in Form einer FPGA-Komponente.

4. Controller (18) nach einem der vorhergehenden Ansprüche, der gemäß demselben Kritikalitätsniveau wie das Verifikationsmodul (14) implementiert ist, wobei dieses Kritikalitätsniveau größer oder gleich dem Kritikalitätsniveau des Betriebsmoduls (12) ist.

5. Controller (18) nach einem der vorhergehenden Ansprüche, der außerdem so konfiguriert ist, dass er beim Kaltstart des Systems der Betriebsfunktion eine Speicheradresse zuordnet, auf die die Überprüfungsfunktion zugreifen kann.

6. Controller (18) nach einem der vorherigen Ansprüche, wobei das eingebettete System (10) ferner ein Konfigurationsmodul (16) umfasst;
wobei die Funktionsüberprüfung außerdem eine Überprüfung der Authentizität und Integrität des Konfigurationsmoduls (16) umfasst.

7. Eingebettetes System (10), umfassend:
- ein Betriebsmodul (12), das eine Betriebsfunktion des Systems (10) integriert;
- ein Verifikationsmodul (14), das eine Überprüfungsfunktion verschiedener Komponenten des Systems (10) integriert;
- ein sicherer Start-Controller (18) nach einem der vorherigen Ansprüche.

8. Verfahren zum sicheren Starten des eingebetteten Systems (10) nach Anspruch 7;
Wobei das Verfahren die folgenden Schritte umfasst:
- bei einem Kaltstart des eingebetteten Systems (10) die Überprüfungsfunktion beim Start ausführbar machen, um eine Funktionsüberprüfung durchzuführen, die eine Überprüfung der Authentizität und Integrität der Betriebsfunktion umfasst; oder
- wenn die Funktionsüberprüfung erfolgreich ist, bei jedem Warmstart, der auf den Kaltstart des Systems (10) folgt, die Betriebsfunktion beim Start ausführbar machen.

## Claims

1. A securing boot controller (18) for an embedded system (10), the embedded system (10) further comprising an operational module (12) incorporating an operational function of the system (10), and a verification module (14) incorporating a function of verifying various components of the system (10);
the controller (18) being configured to:
- upon cold start of the system (10), to make the verification function executable to perform a functional verification at boot up, including a verification of the authenticity and integrity of the operational function;
- upon successful completion of the functional verification, at each warm start following said cold start of the system (10), to make the operational function executable at boot up,
wherein cold start corresponds to a reboot of the system (10) after a power failure leading to a loss of at least a portion of data contained in a random-access memory (24) of the system (10),
the controller (18) being further configured to consult the status of a startup register modifiable by a power controller of the embedded system (10) to determine the boot type selected, between a hot startup and a cold startup.

2. The controller (18) according to claim 1, configured to make a function executable at boot up by placing that function or a reference to it in a reserved boot sector (32) of the system (10).

3. The controller (18) according to claim 1 or claim 2, being in the form of a hardware component, preferentially being in the form of an FPGA component.

4. The controller (18) according to any one of the preceding claims, implemented according to the same criticality level as the verification module (14), this criticality level being greater than or equal to the criticality level of the operational module (12).

5. The controller (18) according to any one of the preceding claims, further configured, upon cold start of the system, to associate with the operational function a memory address accessible by the verification function.

6. The controller (18) according to any one of the preceding claims, wherein the embedded system (10) further comprises a configuration module (16);
said functional verification further comprising a verification of the authenticity and integrity of the configuration module (16).

7. An embedded system (10) comprising:
- an operational module (12) integrating an operational function of the system (10);
- a verification module (14) incorporating a function to verify various components of the system (10);
- a securing boot controller (18) according to any one of the preceding claims.

8. A method for securely starting the embedded system (10) according to claim 7;
the method comprising the following step:
- upon a cold start of the embedded system (10), making the verification function executable at boot up, to perform a functional verification comprising a verification of the authenticity and integrity of the operational function; or
- upon successful completion of the functional verification, at each warm start following said cold start of the system (10), making the operational function executable at boot up.
